# EUROPÄISCHE PATENTSCHRIFT

(11) **EP 1 435 468 B1**
(45) Veröffentlichungstag und Bekanntmachung des Hinweises auf die Patenterteilung: **07.06.2006**
(21) Anmeldenummer: 04006615.1
(22) Anmeldetag: 24.03.1999
(51) Int. Cl.: F16D 13/58

(54) **Ausrückung für eine Kupplungsdruckplatt**
Release assembly for a clutch pressure plate
Unité de débrayage pour plateau de pression d'un embrayage

(30) Priorität: 17.04.1998 DE 19817171; 22.04.1998 DE 19817838; 24.04.1998 DE 19818535; 08.07.1998 DE 19830525
(43) Veröffentlichungstag der Anmeldung: 07.07.2004
(62) Teilanmeldung aus: 99105921.3
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, cand.-Ing., 52351 Düren (DE); Heidingsfeld, Dietmar, Dipl.-Ing., 52078 Aachen (DE)
(74) Vertreter: Patentanwaltskanzlei Liermann-Castell

(56) Entgegenhaltungen:
- DE-C- 161 908
- US-A- 1 464 173
- US-A- 2 885 047
- US-A- 4 425 991

## Beschreibung

Die Erfindung betrifft eine Ausrückeeinheit für eine Kupplungsdruckplatte.

Derartige Ausrückeeinheiten für Kupplungsdruckplatten umfassen in der Regel eine zwischen der Kupplungsdruckplatte und einem Kupplungsgehäuse verspannte Tellerfeder, welche die Kupplungsdruckplatte gegen eine Reibscheibe einer Kupplung presst. Hierbei wird die Tellerfeder durch ein Festlager an dem Kupplungsgehäuse gelagert und mittels radial nach innen weisender Zungen durch einen axial wirksamen Ausrücker ausgerückt.

Wegen der hierbei vorhandenen Hebellängen weisen derartige Kupplungen verhältnismäßig große Baulängen auf. Zu dieser durch die Hebel bedingten Baulänge kommt noch hinzu, dass durch einen Belagverschleiß die Tellerfeder eine große Winkelbewegung ausführt, die ebenfalls durch die Kupplung vorgehalten werden muss. Darüber hinaus weist die Gesamtanordnung der Kupplung Toleranzen zwischen Kupplungsgehäuse und Zentralausrücker auf, die ebenfalls über die Baulänge aufgefangen werden müssen.

Auch ist es beispielsweise aus der US 2,885,047 und aus der US 4,425,991 bekannt, Tellerfedern mit abgewinkelten Bereichen zu versehen, um Kupplungen fliehkraftabhängig ansteuern zu können. Da die abgewinkelten Bereiche von der Druckplatte weg weisen, erhöht sich hierdurch das Baulängenproblem jedoch erheblich, zumal die Tellerfedern nach wie vor wie die Tellerfedern in der vorstehend beschriebenen Weise betätigt werden und die Fliehkraftabhängigkeit lediglich ergänzend eingesetzt wird.

Es ist Aufgabe vorliegender Erfindung, eine möglichst schmale Bauweise einer entsprechenden Kupplung zu ermöglichen.

Als Lösung schlägt die Erfindung eine Ausrückeeinheit für eine Fahrzeugkupplung mit einer auf eine Druckplatte wirkenden Tellerfeder vor, die sich dadurch auszeichnet, dass die Tellerfeder einen in axiale Richtung auf die Druckplatte hin abgebogenen Bereich zur Aufnahme einer Kraft mit einer radialen Komponente aufweist.

Eine Umsetzung der Erfindung kann insbesondere durch einen Kraftwandler, der eine Kraft mit einer radialen Komponente in eine im wesentlichen axial gerichtete, auf die Druckplatte aufgebrachte Kraft wandeln kann, und durch einen Kraftgeber, der mit einer Kraft mit einer radialen Komponente auf den Kraftwandler wirken kann, realisiert werden.

Dadurch, dass die Mittel zum Aufbringen der im wesentlichen axial gerichteten Kraft einen radialen Antrieb umfassen, erfolgt dementsprechend eine radiale Verlagerung der Anordnung, wenn ein derartiger Antrieb erfolgt. Insofern braucht bei der erfindungsgemäßen Anordnung eine geringere Baulänge bereitgestellt werden, als bei bekannten Kupplungsbetätigungen, da der für die Betätigung notwendige Raum im wesentlichen in radialer Richtung benötigt wird.

Insbesondere wird auch dementsprechend weniger Bauraum in axialer Richtung für eine Verschleißnachstellung benötigt.

Darüber hinaus kann an dem Übergang zwischen Kraftwandler und Kraftgeber eine axiale Verschiebe- bzw. Ausgleichsmöglichkeit vorgesehen sein, die einen Verschleiß der Kupplungsreibbeläge ausgleicht. Insofern ermöglicht die erfindungsgemäße Anordnung, auf einen Leerweg und somit auf eine hierfür vorzusehende zusätzliche Baulänge zur Gänze bzw. teilweise zu verzichten.

Eine derartige Verschiebe- bzw. Ausgleichsmöglichkeit kann z.B. derart realisiert werden, dass die radial angetriebenen Mittel der Verschiebung, beispielsweise wegen Verschleiß, mit einer axialen Komponente folgen, während ein entsprechender, radialer Antrieb im wesentlichen ortsfest bleibt.

Die erfindungsgemäßen Anordnung, welche in vorteilhafter Weise auf einen axial zu betätigenden Hebel verzichten und axial auf die Kupplungsdruckplatten aufgebrachten Kräften durch radiale Kräfte begegnen, stellen des weiteren in vorteilhafter Weise eine Schwingungsfilter dar, durch welchen in der Kurbelwelle auftretende axiale Schwingungen, die ansonsten bis in den Zentralausrücker und bis zu dem Kupplungspedal weitergetragen werden, beim Übergang zwischen den Mitteln zum Aufbringen einer im wesentlichen axial gerichteten Kraft und dem Zentralausrücker abgefangen werden.

In der Zeichnung zeigen:

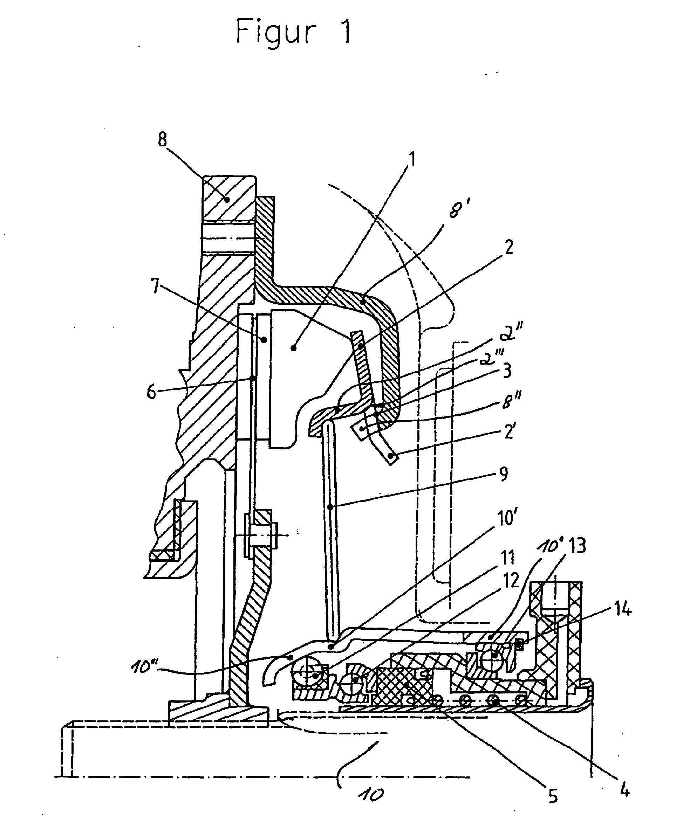

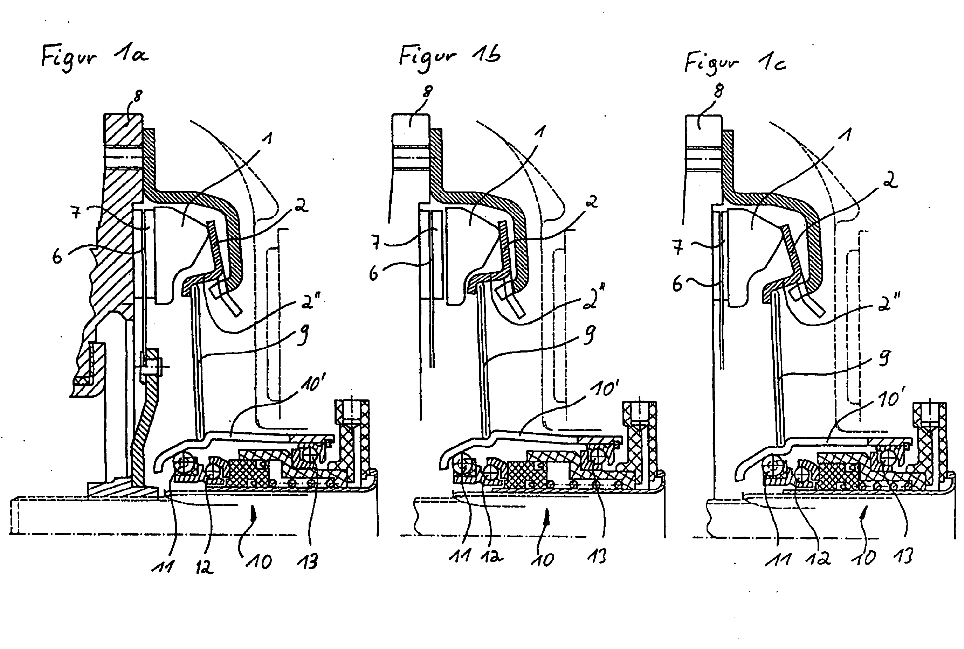

- Figur 1: eine erfindungsgemäße Ausrückeeinheit sowie eine erfindungsgemäße Betätigung für eine Ausrückeeinheit im Schnitt,
- Figur 1 a: die Anordnung nach Fig. 1 in derselben Darstellung wie Figur 1,
- Figur 1b: die Anordnung nach Figur 1 in betätigtem Zustand, Figur 1c die Anordnung nach Figur 1 bei Verschleiß,
- Figur 2: eine weitere Ausrückeeinheit sowie eine weitere erfindungsgemäße Betätigung für eine Ausrückeeinheit in ähnlicher Darstellung wie Figur 1,
- Figur 3: eine dritte Ausrückeeinheit sowie eine dritte erfindungsgemäße Betätigung für eine Ausrückeeinheit in ähnlicher Darstellung wie Figur 1,
- Figur 4: eine als Stößel dienende Tellerfeder in Aufsicht,
- Figur 5: eine vierte Ausrückeeinheit sowie eine vierte erfindungsgemäße Betätigung für eine Ausrückeeinheit in ähnlicher Darstellung wie in Figur 1 und
- Figur 6: eine Detailansicht der Anordnung nach Figur 5.

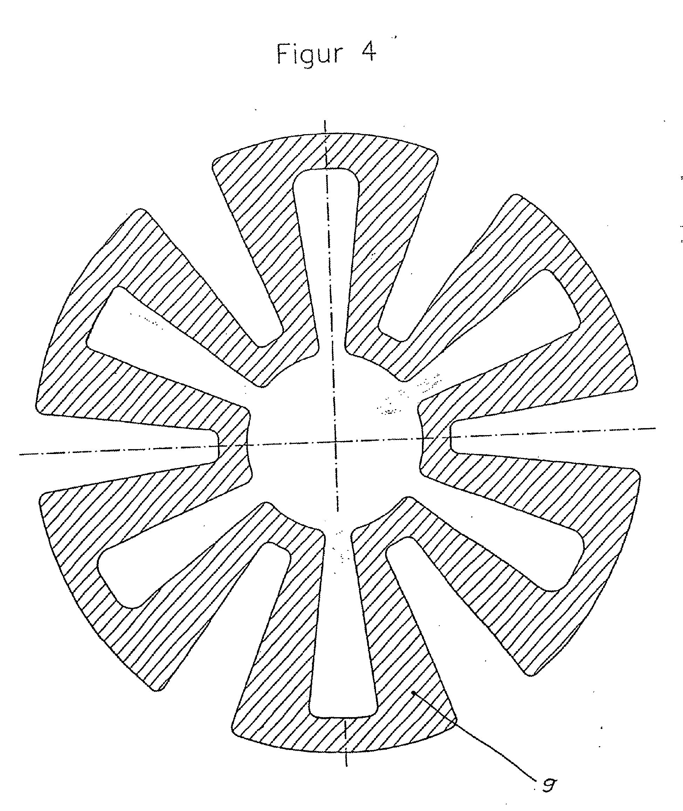

Bei dem in den Figuren 1 bis 1 c dargestellten Ausführungsbeispiel ist eine Mitnehmerscheibe 6 mit ihren beiden Reibbelägen 7 zwischen einem Kupplungsflansch 8 und einer Druckplatte 1 eingeklemmt. Eine entsprechende Vorspannung liefert eine Tellerfeder 2, die sich an einem Drehpunkt 3 eines Kupplungsgehäuses 8' abstützt und als Ausrückeeinheit dient. Zum Auskuppeln wird die Tellerfeder 2 ausgerückt, so dass die Klemmspannung zwischen Kupplungsflansch 8 und Druckplatte 1 aufgehoben ist (siehe Figur 1b). Das geschieht dadurch, dass eine Tellerfeder 9 (beispielhaft in Figur 4 dargestellt) durch einen Zentralausrücker 10 betätigt wird und damit einen in axiale Richtung auf die Druckplatte weisenden Hebel 2" der Tellerfeder 2 auslenkt. Beim Einrücken erfolgt dieser Vorgang in umgekehrter Richtung.

Wie ersichtlich, liegt die Tellerfeder 2 auf Höhe des Drehpunktes 3 lediglich an dem Kupplungsgehäuse an. Zur Stabilisierung der Tellerfeder 2 weist diese Zungen 2' auf.

Der Zentralausrücker 10 umfasst als Umlenker mehrere, über einen zylinderförmigen Bereich miteinander verbundene Zungen 10', die einerseits über einen zylinderförmigen Bereich 10" an einem Kugellager 13 und andererseits über einen schräg verlaufenden Bereich 10"' und Walzen 11 an einem Kugellager 12 abgestützt sind. Der zylinderförmige Bereich 10" ist über einen Sicherungsring 14 an dem Kugellager 13 gesichert. Die beiden Kugellager 12, 13 sind über einen Stempel 5 und eine Feder 4 hydraulisch axial gegeneinander bewegbar. Statt des hydraulischen Antriebs ist allerdings jede mögliche Antriebsart, insbesondere ein mechanischer, pneumatischer oder elektrischer Antrieb denkbar.

Bei einer Axialbewegung des Kugellagers 12 rollen die Walzen 11 an der Schräge 10"' der Zungen 10' entlang und die Axialbewegung wird in eine Radialbewegung der Zungen 10' umgesetzt. Hierdurch wird die Tellerfeder 9 angetrieben. Wie ersichtlich, erfolgt die relative Axialbewegung der Kugellager 12, 13 nach außen hin kräftefrei, so dass der Zentralausrücker 10 nur mit wesentlich geringerer Festigkeit in seiner Position gehalten werden muss. Insbesondere kann sogar eine Clips- oder Rastverbindung zu dessen Befestigung ausreichen.

Bei Verschleiß (siehe Fig. 1c) wird der Stempel 5 durch die Tellerfedern 2 und 9 weiter eingerückt. Wie ersichtlich, sind die hierbei auftretenden Weglängen wesentlich geringer, als wenn ein Hebel von der Tellerfeder 2 bis zu dem Stempel 5 geführt wäre, wie beim Stand der Technik der Fall.

Hierbei und bei der Montage kann die Tellerfeder 2 an einem Anschlag 8", der durch eine entsprechende Abwinklung des Gehäuses 8' gebildet ist, anliegen.

Die Tellerfeder 9 ist derart ausgelegt, dass sie in unverspanntem Zustand konusförmig ist. Zur Montage braucht die Tellerfeder 9 dann lediglich gegen eine radiale Schulter des Hebels 2" der Tellerfeder 2 gebracht werden und wird dann von einer entsprechenden Schulter des Zentralausrückers 10 erfasst, wenn dieser eingesetzt wird. Erreicht der Zentralausrücker 10 seine Montageposition befindet sich dann auch die Tellerfeder 9 in ihrer in Figur 1 dargestellten Position.

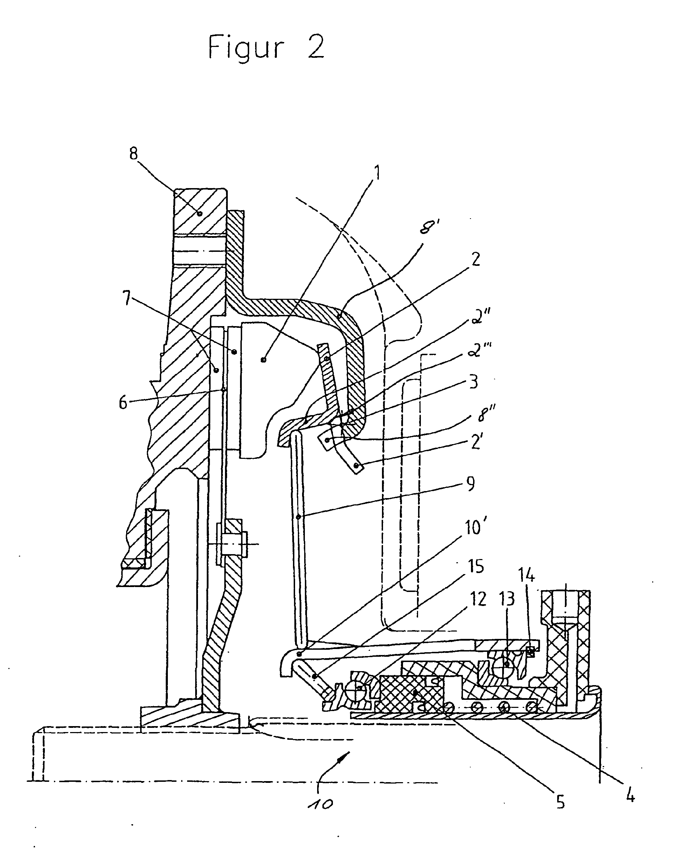

Die in Figur 2 dargestellte Ausführungsform entspricht im wesentlichen der zuvor beschriebenen Ausführungsform. Lediglich die Montageschulter des Zentralausrückers 10 ist als Zunge ausgeformt, und es wird statt der Walze 11 eine als Hebel dienende Tellerfeder 15 verwandt.

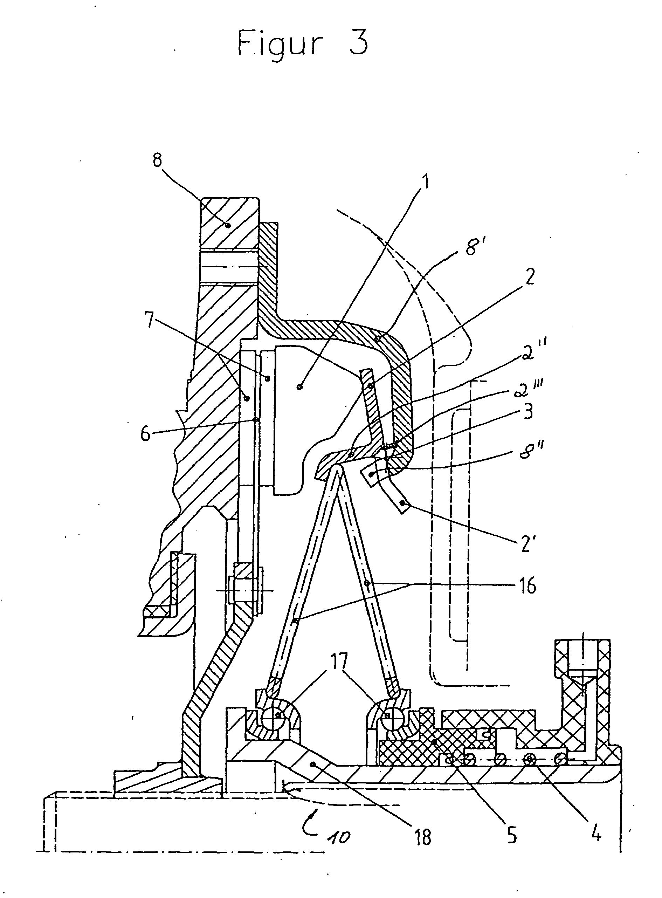

Die in Figur 3 dargestellte Ausführungsform zeichnet sich gegenüber den zuvor beschriebenen Ausführungsformen dadurch aus, dass Fliehkräfte nur eine untergeordnete Rolle spielen. Bei dieser Ausführungsform ist eine zwei gegeneinander abgewinkelte Teilfedern umfassende Tellerfeder 16 unmittelbar an Kugellagern 17 abgestützt, die auf einer zentralen Halterung 18 gegeneinander axial verschiebbar sind. In der Tellerfeder 16 auftretende Fliehkräfte kompensieren sich bei dieser Ausgestaltung der Tellerfeder 16 weitgehend.

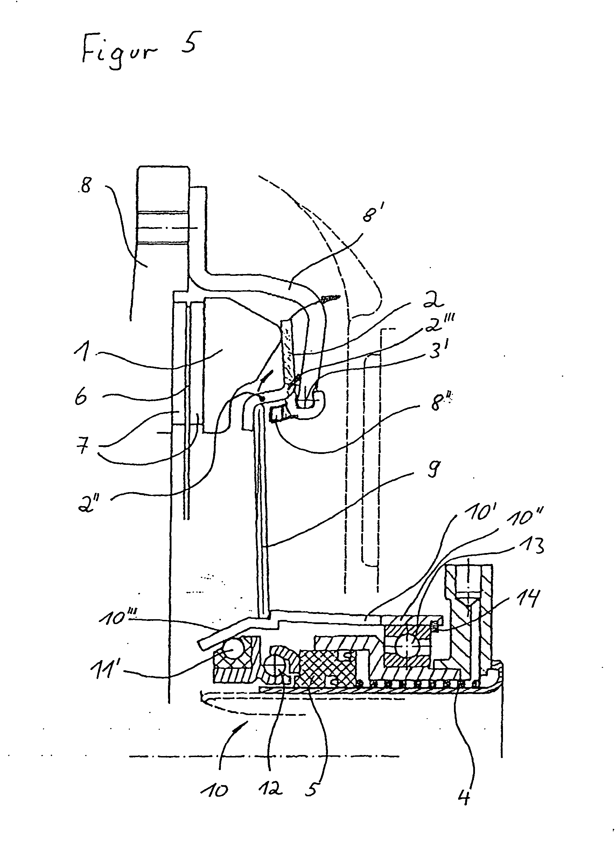

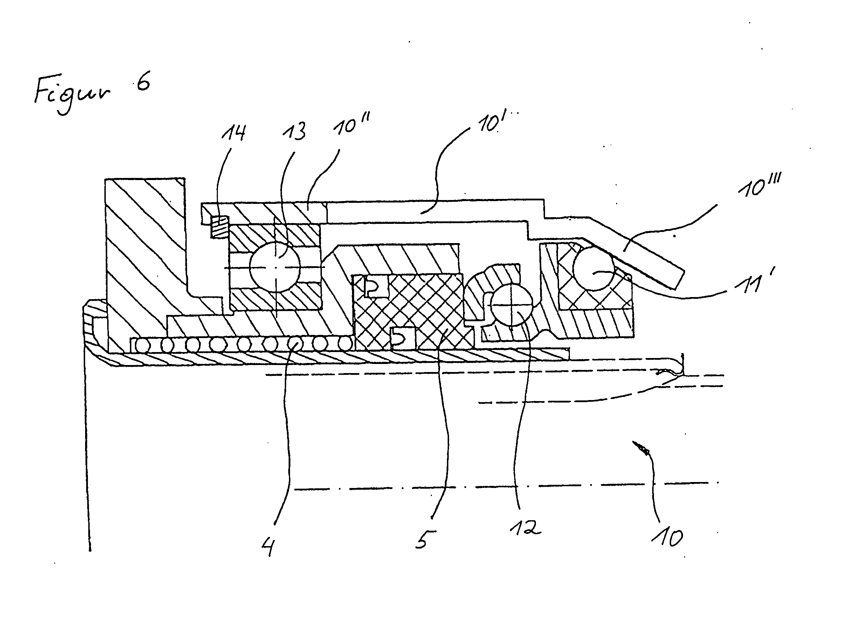

Die in den Figuren 5 und 6 dargestellte Ausführungsform entspricht im wesentlichen der in Figur 1 dargestellten Ausführungsform, nur dass statt der Walzen 11, Kugeln 11' zum Abstützen des schrägverlaufenden Bereichs 10'" vorgesehen sind. Darüber hinaus ist die Feder 4 an einer anderen Stelle des Zentralausrückers 10 abgestützt.

Außerdem ist bei dieser Ausführungsform die Tellerfeder mittels eines Festlagers 3' an dem Gehäuse 8' gelagert. Wie durch die Pfeile angedeutet, sind die Kräfteverhältnisse, unter anderem bedingt durch den radial außerhalb des Lagerpunktes 3' (bzw. 3) vorgesehenen Angriffspunktes 2"' für eine die Tellerfeder 2 ausrückende Kraft, derart, dass an dieser Stelle auch eine einfache Abstützung an dem Gehäuse 8' ausreichen würde.

## Patentansprüche

1. Ausrückeeinheit für eine Fahrzeugkupplung mit einer auf eine Druckplatte (1) wirkenden Tellerfeder (2), ***dadurch gekennzeichnet, dass*** die Tellerfeder (2) einen in axiale Richtung auf die Druckplatte hin abgebogenen Bereich (2") zur Aufnahme einer Kraft mit einer radialen Komponente aufweist.

2. Ausrückeeinheit nach Anspruch 1, ***dadurch gekennzeichnet, dass*** die Tellerfeder (2) einen in axiale Richtung auf die Druckplatte weisenden Hebel (2") aufweist.

3. Ausrückeeinheit nach Anspruch 1 oder 2, ***dadurch gekennzeichnet, dass*** die Tellerfeder (2) an einem Kupplungsgehäuse (8') gelagert ist, wobei der abgebogene Bereich bzw. der Hebel (2, 3') radial außerhalb der Lagerung (3) an der Tellerfeder (2) vorgesehen ist.

4. Ausrückeeinheit nach einem der Ansprüche 1 bis 3, ***gekennzeichnet durch*** eine Bestätigung mit einem mit einer Tellerfeder (9, 16) wirkverbundenen Zentralausrücker (10), die als Stößel (9, 16) an dem abgebogenen Bereich (2') angreift.

## Claims

1. A disengaging unit for a vehicle clutch with a cup spring (2) acting on a pressure plate (1), ***characterized in that*** the cup spring (2) comprises a portion (2") that is bent in an axial direction towards the pressure plate and receives a force with a radial component.

2. The disengaging unit according to claim 1, ***characterized in that*** the cup spring (2) comprises a lever (2") pointing in an axial direction towards the pressure plate.

3. The disengaging unit according to claim 1 or 2, ***characterized in that*** the cup spring (2) is borne on a clutch housing (8'), the bent region respectively the lever (2, 3') being provided radially outside the bearing (3) next to the cup spring (2).

4. The disengaging unit according to one of the claims 1 to 3, ***characterized by*** an actuation having a central disengaging device (10) work-connected to a cup spring (9, 16) and acting as a tappet (9, 16) on the bent region (2').

## Revendications

1. Unité de débrayage pour un embrayage d'un véhicule avec un ressort à disque (2) agissant sur un plateau de pression (1), ***caractérisée en ce que*** le ressort à disque (2) comporte une zone coudée (2") en direction axiale vers le plateau de pression et destinée à recevoir une force avec une composante radiale.

2. Unité de débrayage selon la revendication **1, *caractérisée en ce que*** le ressort à disque (2) comporte un levier (2") orienté en direction axiale vers le plateau de pression.

3. Unité de débrayage selon la revendication 1 ou 2, ***caractérisée en ce que*** le ressort à disque (2) est monté sur un boîtier d'embrayage (8'), la zone coudée respectivement le levier (2, 3') étant prévu radialement à l'extérieur du montage (3) sur le ressort à disque (2).

4. Unité de débrayage selon l'une des revendications 1 à 3, ***caractérisée par*** un actionnement avec un débrayeur central (10) agissant conjointement avec un ressort à disque (9, 16), l'actionnement agissant en tant que poussoir (9, 16) sur la zone coudée (2').
